# EUROPÄISCHE PATENTSCHRIFT

(11) **EP 1 342 522 B1**
(45) Veröffentlichungstag und Bekanntmachung des Hinweises auf die Patenterteilung: **28.09.2005**
(21) Anmeldenummer: 03000926.0
(22) Anmeldetag: 16.01.2003
(51) Int. Cl.: B23D 77/02

(54) **Führungsleiste für ein Reibwerkzeug und deren Herstellverfahren**
Guide for a reaming tool and such a production process
Glissière pour un outil d'alesage et procédé de la fabrication

(30) Priorität: 07.03.2002 DE 10209924
(43) Veröffentlichungstag der Anmeldung: 10.09.2003
(73) Patentinhaber: August Beck GmbH & Co., D-72474 Winterlingen (DE)
(72) Erfinder: Agarico, Jörg, 78351 Bodman-Ludwigshafen (DE)
(74) Vertreter: Gleiss, Alf-Olav

(56) Entgegenhaltungen:
- DE-A- 4 202 751
- US-A- 5 685 671

## Beschreibung

Die Erfindung betrifft eine Führungsleiste gemäß dem Oberbegriff des Anspruchs 1, sowie ein Verfahren zur Herstellung solcher Führungsleisten und auch ein Verfahren zum Erodieren von solchen Führungsleisten-Rohlingen. Eine solche Führungsleiste ist z.Bsp. aus der DE 42 02 751 bekannt.

Hartmetalle sind in ihrer Verwendung als Schneidstoffe schon sehr lange bekannt. Auf dem Gebiet der Präzisionswerkzeuge verwendet man als Schneidstoff PKD-Material, wie es ausführlich z. B. in der Promotionsarbeit von Herrn Siebert beschrieben ist. Die Promotionsarbeit trägt den Titel "Polykristalliner Diamant als Schneidstoff" und hat die Kennung ISBN 3-446-16435-9. Gemäß dem Vorwort des Herausgebers hatte im März 1991 das PKD-Material als Schneidstoff in der spanenden Fertigung bereits seine technologische Leistungsfähigkeit bei der Substitution konventioneller Schneidstoffe unter Beweis gestellt. Aus dem Literaturverzeichnis der Dissertation kann man zum Beispiel aus der Literaturstelle 137 entnehmen, dass es 1981 schon bekannt war, PKD bei der Bearbeitung von Aluminiummotorteilen zu verwenden. Für die Schneiden von Werkzeugen, die der Präzisionsbearbeitung dienen, verwendet man seit langer Zeit PKD-Material mit einem Zusatz von 6 % Cobalt, wie die Dissertation auf Seite 27, Absatz 1 richtig wiedergibt.

Beim hochgenauen Schleifen der Schneiden wird das PKD-Material mit Diamant-Material geschliffen, das heißt Diamant wird mit Diamant geschliffen. Dies bedeutet sehr viel Abrieb auf Seiten der Schleifscheiben. Weiterhin bedeutet dies einen hohen Zeitverlust wegen der langen Bearbeitungsdauer. Die Zustellung der Schleifscheiben an das zu schleifende PKD-Material liegt in der Gegend von z. B. 10 Mikrometer. Damit der Schleifvorgang eingeleitet wird, muß ein bestimmter Anpressdruck der Schleifscheibe an das zu schleifende Material vorhanden sein. Ist er zu gering, dann wird zu wenig oder kaum Material abgeschliffen. Ist der Zustellweg der Diamant-Schleifscheibe zu groß, dann kann es durchaus sein, dass die Anpresskraft der Schleifscheibe vom Maschinengestell der Schleifmaschine aufgenommen wird, d. h. das Maschinenbett um 10 Mikrometer ausweicht und nichts oder praktisch nichts weggeschliffen wird. Stellt man dann ein drittes Mal, z. B. 10 Mikrometer zu, dann kann ein Losbrecheffekt auftreten und es werden wesentlich mehr als die gewünschten 10 Mikrometer abgeschliffen. Es ist also nicht so, dass sich praktisch jeder Zustellweg in einem entsprechenden abgeschliffenen Volumen niederschlägt. Vielmehr kann das Schleifen auch sehr nichtlinear erfolgen. Dies führt bei Präzisionswerkzeugen oft zu Ausschuss und es kann sein, dass dieser Ausschuss nicht bemerkt wird.

Bei der Herstellung der Führungsleisten hat man seit jeher in der gleichen Weise wie beim Schleifen der Schneiden geschliffen, das heißt mit hohem Zeitaufwand, hohem Schleifmaterialaufwand und den weiteren, oben genannten Nachteilen.

In der Literatur zeigt die DE 4329553 einen typischen Anwendungsfall für Führungsleisten. Es wird dort mit einer Beschichtung nach der CBN-Technik gearbeitet und gemäß dieser Schrift nimmt man Abstand von der damals auch schon bekannten PKD-Technologie, erwähnt jedoch schon die Probleme, die beim Entstehen der dort beschriebenen 2 Führungsleisten entstehen.

Die EP 0 713 747 A1 beschreibt die CVD-Technologie. Diese Technologie darf jedoch nicht mit der PKD-Technologie verwechselt werden, obwohl beide Male Diamant im Spiel ist.

Schließlich beschreibt die DE 42 02 751 A1 den Stand der Technik, wenn auch mit einem späteren Veröffentlichungstag wie die oben erwähnte Dissertation.

Es sei darauf hingewiesen, dass die PKD-Führungsleisten in der Regel nicht mit Diamant beschichtet" werden. Vielmehr ist und war es immer so, dass die Führungsleisten aus PKD-Material mit 6 % Cobaltzusatz gefertigt wurden. Dieser 6 % Cobaltzusatz führt zu vergleichsweise vielen polykristallinen Diamanten. Dementsprechend ist das PKD-Material hart und seine Bearbeitung in oben erläuterter Weise schwierig.

Dabei ist zu bedenken, dass die Arbeitsfläche der Führungsleisten so genau geschliffen sein muß, dass sie wenig kleiner wie der Flugkreis der Schneide ist. Es muß auch eine Schräge an der vorauseilenden Seite der Führungsleiste richtig angeschliffen werden, so dass sich im gewünschten Fall in dem schmalen Spalt zwischen Flugkreis und Arbeitsfläche der Führungsleiste ein geeigneter Schmiermittel-Filmkeil ausbilden kann.

Aufgabe der Erfindung ist es, Wege zur Zeitersparnis, zur Schleifmaterialersparnis und auch zur einfacheren und genaueren Herstellung von Führungsleisten anzugeben, sowie das Herausschneiden der Führungsleistenrohlinge aus PKD-Ronden zu erleichtern. Erfindungsgemäß wird dies Aufgabe durch die aus dem Anspruch 1 ersichtlichen Merkmale gelöst.

Indem erfindungsgemäß ein höheres Volumen an Cobalt für das Ausgangsmaterial gewählt wird, wird zunächst einmal der Rohling leichter erodierbar. Dies geschieht üblicherweise mit einer Draht-Funkenerosion. Die elektrische Leitfähigkeit des Hartmetalls wird dadurch größer, die Erodiergeschwindigkeit kann dementsprechend erhöht werden, der feine Erosions-Draht reißt nicht so häufig, es wird Zeit gespart und man kann den aus der Ronde herausgeschnittenen Führungsleisten-Rohling schneller seiner Endbearbeitung zuführen.

Nach Zustellung der Schleifscheibe weicht die zu schleifende Führungsleiste weniger bis gar nicht mehr aus, weil sie nicht mehr so hart ist. Dem Maß der Zustellung entspricht - zumindest einigermaßen linear - die Dicke der abgeschliffenen Führungsleistenschicht. Zum Beispiel kann man bei einem Sprung von 6 % Cobalt auf 20 % die Schleifzeit der Führungleisten etwa um die Hälfte verringern.

Bei Betrachtung der Verschleißkurve, die eine ziemlich starke Hyperbelfunktion ist, sinkt der Verschleiß des Schleifmaterials wesentlich überproportional, sondern vielmehr um etwa das Vierfache.

Die Vorteile erkauft man keineswegs dadurch, dass das Adhäsionsverhalten des Hartmetalls mit höherem Cobaltzusatz zu mehr oder nicht tragbarer Adhäsion desjenigen Materials an der Führungsleiste führt, das regelmäßig für die Herstellung von PKW-Motoren, Getriebegehäusen und Fahrwerksteilen verwendet wird. Bislang wurde dem Adhäsionsverhalten ein zu hoher Stellenwert beigemessen. Das Adhäsionsverhalten von PKD-Führungsleisten mit normalerweise verwendetem Cobaltzusatz war sozusagen viel zu gut, als das man hieraus hätte einen Nutzen ableiten können. Die erfindungsgemäßen PKD-Führungsleisten nutzen sich keineswegs schneller ab, wie PKD-Führungsleisten mit einem 6%igen Cobaltzusatz.

## Patentansprüche

1. Führungsleiste für leistengeführte spanabhebende Werkzeuge, welche der Präzisionsbearbeitung von rotationssymetrischen Bohrungen dienen, wobei die Führungsleiste auf deren Arbeitsfläche passend zum Nenndurchmesser des Werkzeugs durch Schleifen mit Diamant-Schleifmittel geschliffen ist, wobei die Führungsleiste eine PKD-Führungsleiste mit einer Härte entsprechend dem Cobaltanteil des zur Herstellung dienenden PKD-Materials ist, **dadurch gekennzeichnet daß** der Cobalt volumen anteil größer als 10% ist.

2. Führungsleiste nach Anspruch 1 **dadurch gekennzeichnet, daß** der Cobaltanteil größer als 11 % ist.

3. Führungsleiste nach Anspruch 1 **dadurch gekennzeichnet, daß** der Cobaltanteil größer als 12 % ist.

4. Führungsleiste nach Anspruch 1 **dadurch gekennzeichnet, daß** der Cobaltanteil größer als 13 % ist.

5. Führungsleiste nach Anspruch 1 **dadurch gekennzeichnet, daß** der Cobaltanteil größer als 14 % ist.

6. Führungsleiste nach Anspruch 1 **dadurch gekennzeichnet, daß** der Cobaltanteil größer als 15 % ist.

7. Führungsleiste nach Anspruch 1 **dadurch gekennzeichnet, daß** der Cobaltanteil größer als 16 % ist.

8. Führungsleiste nach Anspruch 1 **dadurch gekennzeichnet, daß** der Cobaltanteil größer als 17 % ist.

9. Führungsleiste nach Anspruch 1 **dadurch gekennzeichnet, daß** der Cobaltanteil größer als 18 % ist.

10. Führungsleiste nach Anspruch 1 **dadurch gekennzeichnet, daß** der Cobaltanteil größer als 19 % ist.

11. Führungsleiste nach Anspruch 1 **dadurch gekennzeichnet, daß** der Cobaltanteil größer als 20 % ist.

12. Führungsleiste nach Anspruch 1 **dadurch gekennzeichnet, daß** der Cobaltanteil größer als 21 % ist.

13. Führungsleiste nach einem Ansprüche 1 bis 12, **dadurch gekennzeichnet daß** der Cobaltanteil in allen Fällen kleiner als 35% ist.

14. Verfahren zur Herstellung von Führungsleisten aus PKD Führungsleisten-Rohlingen mittels Schleifen der Funktionsfläche der Führungsleiste, **dadurch gekennzeichnet, daß** der Volumen-Prozentanteil des Cobalts des Führungsleisten-Rohlings größer als 10%, oder größer als 11%, oder größer als 12%, oder größer als 13%, oder größer als 14%, oder größer als 15%, oder größer als 16%, oder größer als 17%, oder größer als 18%, oder größer als 19%, oder größer als 20%, oder größer als 21% ist jedoch kleiner als 35% ist.

15. Verfahren zum Erodieren von Führungsleisten-Rohlingen aus PKD-Ronden, **dadurch gekennzeichnet, daß** das Material der Ronde einen Cobaltanteil gemäß einem der Ansprüche 1 - 14 hat.

## Claims

1. Guide for guided, material removing tools used for the precision machining of rotationally symmetric bores, said guide having a working surface which is ground by means of diamond abrasives to match the nominal diameter of the tool, said guide being a PCD guide with a hardness corresponding to the cobalt percentage of the PCD material which is used for production purposes, **characterised in that** the cobalt volume percentage is greater than 10 %.

2. Guide according to claim 1, **characterised in that** the cobalt percentage is greater than 11 %.

3. Guide according to claim 1, **characterised in that** the cobalt percentage is greater than 12 %.

4. Guide according to claim 1, **characterised in that** the cobalt percentage is greater than 13 %.

5. Guide according to claim 1, **characterised in that** the cobalt percentage is greater than 14 %.

6. Guide according to claim 1, **characterised in that** the cobalt percentage is greater than 15 %.

7. Guide according to claim 1, **characterised in that** the cobalt percentage is greater than 16 %.

8. Guide according to claim 1, **characterised in that** the cobalt percentage is greater than 17 %.

9. Guide according to claim 1, **characterised in that** the cobalt percentage is greater than 18 %.

10. Guide according to claim 1, **characterised in that** the cobalt percentage is greater than 19 %.

11. Guide according to claim 1, **characterised in that** the cobalt percentage is greater than 20 %.

12. Guide according to claim 1, **characterised in that** the cobalt percentage is greater than 21 %.

13. Guide according to one of claims 1 to 12, **characterised in that** the cobalt percentage is in any case less than 35 %.

14. Process for the production of guides from PCD guide blanks by grinding the working surface of the guide, **characterised in that** the cobalt volume percentage of the guide blanks is greater than 10 %, or greater than 11 %, or greater than 12 %, or greater than 13 %, or greater than 14 %, or greater than 15 %, or greater than 16 %, or greater than 17 %, or greater than 18 %, or greater than 19 %, or greater than 20 %, or greater than 21 %, but less than 35 %.

15. Process for eroding guide blanks from circular PCD blanks, **characterised in that** the material of the circular blank has a cobalt percentage according to any one of the claims 1 to 14.

## Revendications

1. Glissière pour des outils à enlèvement de matière guidés, destinés à l'usinage de précision d'alésages rotativement symétriques, ladite glissière disposant d'une surface de travail usinée par des abrasifs en diamant de manière à correspondre au diamètre nominal de l'outil, ladite glissière étant une glissière PCD d'une dureté en fonction du pourcentage de cobalt du matériau PCD utilisé pour la production, **caractérisée en ce que** le pourcentage de volume de cobalt est supérieur à 10 %.

2. Glissière selon la revendication 1, **caractérisée en ce que** le pourcentage de cobalt est supérieur à 11 %.

3. Glissière selon la revendication 1, **caractérisée en ce que** le pourcentage de cobalt est supérieur à 12 %.

4. Glissière selon la revendication 1, **caractérisée en ce que** le pourcentage de cobalt est supérieur à 13 %.

5. Glissière selon la revendication 1, **caractérisée en ce que** le pourcentage de cobalt est supérieur à 14 %.

6. Glissière selon la revendication 1, **caractérisée en ce que** le pourcentage de cobalt est supérieur à 15 %.

7. Glissière selon la revendication 1, **caractérisée en ce que** le pourcentage de cobalt est supérieur à 16 %.

8. Glissière selon la revendication 1, **caractérisée en ce que** le pourcentage de cobalt est supérieur à 17 %.

9. Glissière selon la revendication 1, **caractérisée en ce que** le pourcentage de cobalt est supérieur à 18 %.

10. Glissière selon la revendication 1, **caractérisée en ce que** le pourcentage de cobalt est supérieur à 19 %.

11. Glissière selon la revendication 1, **caractérisée en ce que** le pourcentage de cobalt est supérieur à 20 %.

12. Glissière selon la revendication 1, **caractérisée en ce que** le pourcentage de cobalt est supérieur à 21 %.

13. Glissière selon l'une des revendications 1 à 12, **caractérisée en ce que** le pourcentage de cobalt est dans tous les cas inférieur à 35 %.

14. Procédé pour la fabrication de glissières à partir de glissières PCD brutes en abrasant la surface de travail de la glissière, **caractérisé en ce que** le pourcentage de volume de cobalt de la glissière PCD brute est supérieur à 10 %, ou supérieur à 11 %, ou supérieur à 12 %, ou supérieur à 13 %, ou supérieur à 14 %, ou supérieur à 15 %, ou supérieur à 16 %, ou supérieur à 17 %, ou supérieur à 18 %, ou supérieur à 19 %, ou supérieur à 20 %, ou supérieur à 21 %, pourtant inférieur à 35 %.

15. Procédé pour éroder des glissières brutes à partir de ronds PCD, **caractérisé en ce que** le matériau du rond a un pourcentage de cobalt selon l'une des revendications 1 à 14.
